# EUROPÄISCHE PATENTSCHRIFT

(11) **EP 1 147 650 B1**
(45) Veröffentlichungstag und Bekanntmachung des Hinweises auf die Patenterteilung: **02.11.2005**
(21) Anmeldenummer: 00912341.5
(22) Anmeldetag: 02.02.2000
(51) Int. Cl.: H04M 1/274, G06F 12/02

(54) **VORRICHTUNG UND VERFAHREN ZUM SPEICHERN VON TELEFONEINTRÄGEN**
DEVICE AND METHOD FOR STORING TELEPHONE ENTRIES
DISPOSITIF ET PROCEDE POUR MEMORISER DES ENTREES TELEPHONIQUES

(30) Priorität: 04.02.1999 DE 19904573
(43) Veröffentlichungstag der Anmeldung: 24.10.2001
(73) Patentinhaber: SIEMENS AKTIENGESELLSCHAFT, 80333 München (DE)
(72) Erfinder: SLONINA, Bernhard, D-44359 Dortmund (DE); HADT, Alexander, D-59174 Kamen (DE); BEERENS, Hans-Georg, D-46395 Bocholt (DE); RÜTHER, Ralf, D-48653 Coesfeld (DE); DRIESSEN, Peter, Paul, Matthias, D-47805 Krefeld (DE); SCHOLZ, Peter, D-46397 Bocholt (DE)
(86) Internationale Anmeldenummer: PCT/DE2000/000318
(87) Internationale Veröffentlichungsnummer: WO 2000/046970

(56) Entgegenhaltungen:
- EP-A- 0 704 803
- EP-A- 0 833 251
- WO-A-80/02610
- GB-A- 2 297 399
- PATENT ABSTRACTS OF JAPAN vol. 018, no. 409 (P-1779), 29. Juli 1994 (1994-07-29) & JP 06 119234 A (TOKYO ELECTRIC CO LTD), 28. April 1994 (1994-04-28)

## Beschreibung

Die Erfindung bezieht sich auf eine Vorrichtung und ein Verfahren zum Speichern von Einträgen in zumindest zwei getrennten Speicherbereichen einer nicht-flüchtigen Speichervorrichtung und insbesondere auf eine dynamische Wahlwiederholungsliste in einem Telekommunikations-Endgerät.

Herkömmliche Telekommunikations-Endgeräte wie beispielsweise schnurlose Telefone oder Handys besitzen zur Speicherung von Telefoneinträgen eine nicht-flüchtige Speichervorrichtung, die jedoch nur eine begrenzte Kapazität aufweist.

Figur 4 zeigt eine schematische Darstellung einer derartigen nicht-flüchtigen Speichervorrichtung 1, in der beispielsweise ein fest vorgegebener Speicherbereich A für eine Telefonbuchliste, ein fest vorgegebener Speicherbereich B für eine Wahlwiederholungsliste und ein fest vorgegebener Speicherbereich C für kundenspezifische Einstellungen wie z. B. Lautstärke, Tonruf, Warntöne, Sprache usw. vorgesehen ist. Der Speicherbereich A für die Telefonbuchliste besitzt üblicherweise eine Größe für ca. 100 Einträge (Name und Rufnummer). Der Speicherbereich B für die Wahlwiederholungsliste ist üblicherweise wesentlich kleiner als der Speicherbereich A für die Telefonbuchliste und besitzt eine Kapazität für ca. 5 bis 10 Einträge (Rufnummern). Der Speicherbereich C ist im nicht-flüchtigen Speicher 1 für sogenannte kundenspezifische Einstellungen reserviert und kann nicht für Telefoneinträge verwendet werden.

Eine derartige herkömmliche Realisierung für Telefoneinträge in einem nicht-flüchtigen Speicher 1 besitzt jedoch den Nachteil, daß insbesondere die Liste für die Wahlwiederholungen, d. h. der Speicherbereich B, einen zu kleinen Umfang aufweist und andererseits die Verwendung eines nicht-flüchtigen Speichers mit höherer Speicherkapazität aus Kostengründen nicht in Betracht gezogen wird.

Aus der JP 06119234 ist eine Anordnung zur Speicherverwaltung bekannt, bei der Daten von einer Zentraleinheit in einem Speicher gespeichert werden, wobei diese Daten eine Unterscheidungseinheit durchlaufen, die die Daten in einem ersten Bereich des Speichers speichern, wenn es sich um Daten handelt, die nicht gelöscht werden sollen und in einem zweiten Datenbereich speichert, wenn es sich um Daten handelt, die bei einem Update gelöscht werden sollen. Übersteigt der Speicherplatzbedarf der Daten, die in dem ersten Bereich gespeichert werden sollen, die Kapazität des ersten Bereiches, werden die über die Kapazität des ersten Bereiches hinausgehenden Daten in den zweiten Bereich kopiert und dieser Teil des zweiten Bereiches dem ersten Bereich zugeschlagen, während der Rest des zweiten Bereiches einer sogenannten "garbage collection" unterworfen wird, d.h. es wird ein Update vorgenommen, bei dem die Daten des zweiten Bereiches gelöscht werden, woraufhin der entstehende freie Bereich des Speichers in einen neuen ersten Bereich und einen neuen zweiten Bereich unterteilt wird.

Der Erfindung liegt daher die Aufgabe zugrunde, eine Vorrichtung und ein Verfahren zum Speichern von Telefoneinträgen zu schaffen, bei der auf kostengünstige Art und Weise insbesondere die Liste für Wahlwiederholungen vergrößert wird.

Erfindungsgemäß wird diese Aufgabe hinsichtlich des Verfahrens mit den Maßnahmen gemäß dem Patentanspruch 1 gelöst. Hinsichtlich der Vorrichtung wird die Aufgabe mit den Merkmalen des Patentanspruchs 10 gelöst.

Insbesondere durch das Erfassen von freiem Speicherplatz in einem der getrennten Speicherbereiche und die Zuordnung von Wertigkeiten für die verschiedenen Speicherbereiche kann eine dynamische Aufteilung des gesamten Speicherbereichs der nicht-flüchtigen Speichervorrichtung vorgenommen werden, wodurch sich eine optimale Ausnutzung der teuren nicht-flüchtigen Speichervorrichtung ergibt.

vorzugsweise enthalten die getrennten Speicherbereiche eine höherwertigere Telefonbuchliste und eine niederwertigere Wahlwiederholungsliste. Bei zusätzlicher Auswertung der Wertigkeiten der getrennten Speicherbereiche können somit dynamisch bis zu 100 Wahlwiederholungs-Rufnummern am Anfang in der Wahlwiederholungsliste abgelegt werden, wobei sich ihre Speicherkapazität mit Auffüllen der höherwertigen Telefonbuchliste nach und nach verringert. Die Speicherkapazität der nicht-flüchtigen Speichervorrichtung wird somit von Anfang an voll genutzt.

Um ein vollständiges Verdrängen der Wahlwiederholungsliste aus der Speichervorrichtung zu verhindern, besteht vorzugsweise die Möglichkeit, eine minimale Größe für die Wahlwiederholungsliste zu reservieren, die eine gleiche Wertigkeit wie die Telefonbuchliste aufweist und somit nicht gelöscht werden kann. Dadurch wird auch bei voller Auslastung der Telefonbuchliste eine minimale Anzahl von Rufnummern in der Wahlwiederholungsliste sichergestellt.

In den Unteransprüchen 2 bis 9 und 11 bis 16 sind vorteilhafte Ausgestaltungen der Erfindung gekennzeichnet.

Die Erfindung wird nachfolgend anhand von Ausführungsbeispielen unter Bezugnahme auf die Zeichnung näher beschrieben.

Es zeigen:
- Figur 1: eine schematische Darstellung eines nicht-flüchtigen Speichers vor und nach dem Abspeichern eines Eintrags;
- Figur 2: ein Flußdiagramm zur Darstellung der Verfahrensschritte gemäß einem ersten Ausführungsbeispiel;
- Figur 3: ein Flußdiagramm zur Darstellung der Verfahrensschritte gemäß einem zweiten Ausführungsbeispiel; und
- Figur 4: eine schematische Darstellung eines nicht-flüchtigen Speichers mit einer festen Speicheraufteilung gemäß dem Stand der Technik.

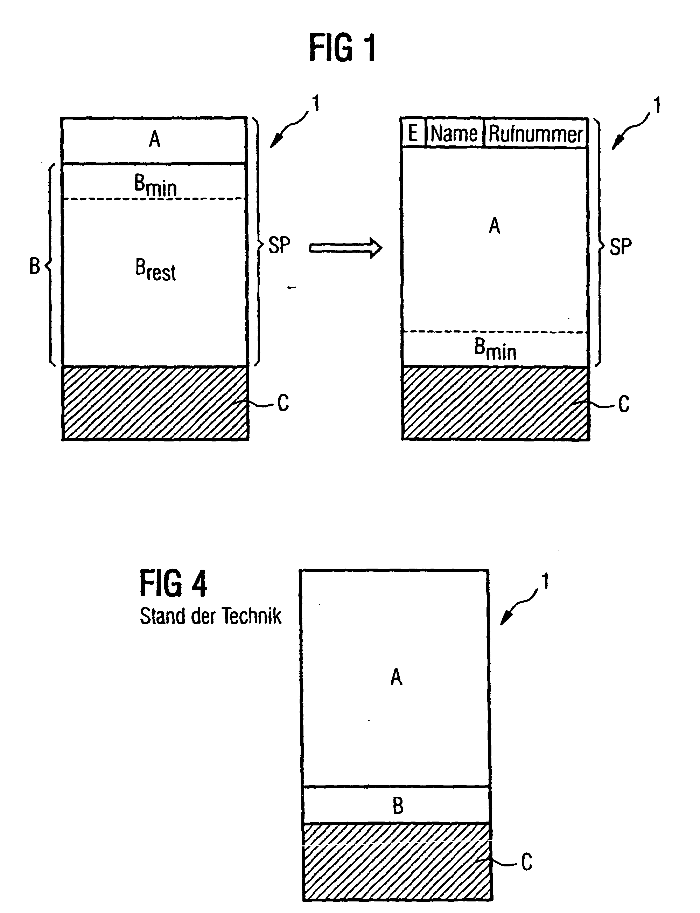

Figur 1 zeigt eine schematische Darstellung eines nicht-flüchtigen Speichers 1 vor und nach dem Abspeichern von Einträgen in einem Speicherbereich A.

Gleiche Bezugszeichen bezeichnen gleiche Komponenten wie im nicht-flüchtigen Speicher 1 gemäß Figur 4, wesizalb auf eine eingehende Beschreibung an dieser Stelle verzichtet wird. Der nicht-flüchtige Speicher 1 gemäß Figur 1 besteht vor dem Abspeichern von Einträgen in einer Telefonbuchliste aus einem getrennten Speicherbereich A, einem getrennten Speicherbereich Bₘᵢₙ, einem getrennten Speicherbereich Bᵣₑₛₜ und einem getrennten Speicherbereich C. Der Speicherbereich C dient wie beim Stand der Technik gemäß Figur 4 zum Abspeichern von kundenspezifischen Einstellungen. Derartige Einstellungen können beispielsweise die Lautsärke, der Tonruf, Warntöne, die Sprache usw. eines Kommunikations-Endgeräts sein. Beispielsweise besteht der nicht-flüchtige Speicher 1 aus einem EEPROM oder FLASHROM, und befindet sich in einem schnurlosen Telefon oder Handy. Er kann jedoch auch in einem schnurgebundenen Telefon oder einem sonstigen Telekommunikations-Endgerät eingesetzt werden, bei dem nur eine begrenzte Speicherkapazität für Telefoneinträge vorhanden ist.

Der Speicherbereich A speichert wie beim Stand der Technik beispielsweise eine Telefonbuchliste in Form von Namen und zugeordneten Rufnummern. Das Bezugszeichen B bezeichnet einen getrennten Speicherbereich zum Speichern einer Wahlwiederholungsliste und besteht beispielsweise aus einer minimalen Wahlwiederholungsliste Bₘᵢₙ und einer Rest-Wahlwiederholungsliste Bᵣₑₛₜ. Das Bezugszeichen SP bezeichnet einen virtuellen Gesamtspeicher, der zum Abspeichern von Telefoneinträgen zur Verfügung steht. Die Speicherkapazität des virtuellen Gesamtspeichers SP ergibt sich gemäß Figur 1 aus der Differenz der Gesamtkapazität des nicht-flüchtigen Speichers 1 und der Kapazität für die kundenspezifischen Einstellungen im Speicherbereich C.

Im Gegensatz zum Stand der Technik, bei dem eine feste Zuordnung der Speicherbereiche A, B und C vorliegt, findet bei der vorliegenden Erfindung eine dynamische Aufteilung des virtuellen Gesamtspeichers SP statt.

Genauer gesagt besitzt ein nicht-flüchtiger Speicher 1 zu Beginn seiner Programmierung eine relativ geringe Anzahl von Telefonbucheinträgen im Speicherbereich A. Da jedoch das Teleon bereits intensiv genutzt wird, werden mit jedem Telefonanruf Rufnummern in der Wahlwiederholungsliste B abgelegt, die aufgrund der dynamischen Verteilung den restlichen Speicherplatz des virtuellen Gesamtspeichers SP verwenden kann. Dies bietet den Vorteil, daß der freie Speicherplatz in der Telefonbuchliste A nicht aufgrund einer festen Zuordnung wie beim Stand der Technik verlorengeht.

Bei intensivem Gebrauch des Kommunikations-Endgeräts werden zunehmend Einträge in der Telefonbuchliste A abgespeichert. Der Speicherbereich A für die Telefonbuchliste besitzt hierbei eine höhere Wertigkeit als der Speicherbereich B der Wahlwiederholungsliste. Aufgrund dieser Tatsache werden bei Vorliegen eines neuen Eintrags E für die Telefonbuchliste A automatisch die ältesten Einträge E in der Wahlwiederholungsliste des Speicherbereichs B gelöscht und als Speicherbereich A für den neuen Telefonbuch-Eintrag E verwendet. Auf diese Weise wächst der Speicherbereich A, wobei sich eine dynamische Verschiebung der Aufteilung zwischen den Speicherbereichen A und B ergibt.

Um ein vollständiges Verdrängen des Speicherbereichs B für die Wahlwiederholungsliste zu vermeiden, kann ein Teil der Wahlwiederholungsliste Bₘᵢₙ eine gleiche Wertigkeit zugeordnet bekommen wie der Speicherbereich A für die Telefonbuchliste. In diesem Fall wird ein Speicherbereich B nur bis auf einen Speicherbereich Bₘᵢₙ vom Speicherbereich A für die Telefonbuchliste zurückgedrängt, wodurch man auch für eine volle Ausschöpfung der Telefonbuchliste eine minimale Anzahl von Wahlwiederholungen im Speicherbereich Bₘᵢₙ bereithält. In Figur 1 ist auf der rechten Seite dieser Zustand dargestellt, bei dem der nicht-flüchtige Speicher 1 bzw. dessen virtueller Gesamtspeicher SP bis auf die minimale Wahlwiederholungsliste im Speicherbereich Bₘᵢₙ vollständig mit Einträgen E für die Telefonbuchliste aufgefüllt ist.

Nachfolgend wird das Verfahren für das vorstehend beschriebene dynamische Aufteilen des virtuellen Gesamtspeichers SP im einzelnen beschrieben.

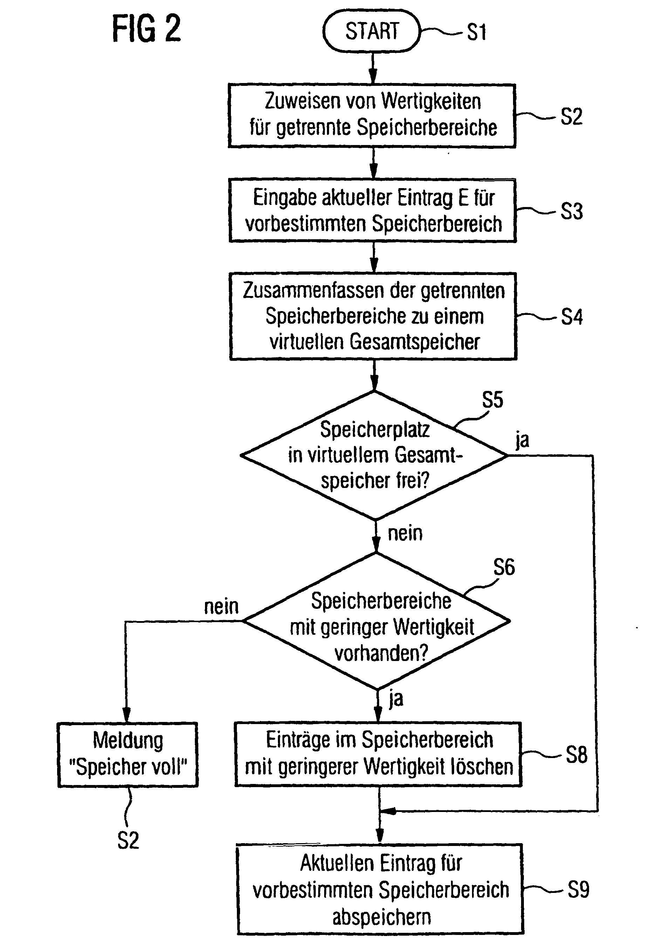

Figur 2 zeigt ein Flußdiagramm der Verfahrensschritte gemäß einem ersten erfindungsgemäßen Ausführungsbeispiel.

Das Bezugszeichen S1 bezeichnet eine Initialisierungsphase für das erfindungsgemäße Verfahren. In einem Schritt S2 werden den getrennten Speicherbereichen A, Bₘᵢₙ und Bᵣₑₛₜ der nicht-flüchtigen Speichervorrichtung 1 vorbestimmte Wertigkeiten zugewiesen, die eine gewisse Hierarchie für die Belegung bzw. Ausbreitung von Speicherplätzen in der nicht-flüchtigen Speichervorrichtung 1 angeben. Ein Speicherbereich A für eine erste Liste besitzt beispielsweise eine höhere Wertigkeit als ein Speicherbereich Bᵣₑₛₜ für eine zweite Liste.

In einem Schritt S3 wird für einen vorbestimmten Speicherbereich ein aktueller Eintrag E eingegeben. Dies kann beispielsweise ein Eintrag E für eine erste Liste, bestehend aus Name und Rufnummer, oder lediglich eine gewählte Rufnummer sein, die in der zweiten Liste abgelegt werden soll. Zum Erfassen eines restlichen freien Speicherplatzes in der nicht-flüchtigen Speichervorrichtung 1 können beispielsweise in einem Schritt S4 die getrennten Speicherbereiche A, Bₘᵢₙ und Bᵣₑₛₜ zu einem virtuellen Gesamtspeicher SP zusammengefaßt werden.

In einem Abfrageschritt S5 erfolgt eine Überprüfung, ob im virtuellen Gesamtspeicher SP noch freie Speicherplätze vorhanden sind. Ist das Ergebnis der Überprüfung in Schritt S5 positiv, d. h. im virtuellen Gesamtspeicher SP ist noch ausreichend Platz für einen aktuellen Eintrag E, so schreitet das Verfahren zu einem Schritt S9. Im Schritt S9 wird der aktuelle Eintrag E für den vorbestimmten Speicherbereich abgespeichert. Genauer gesagt wird ein Eintrag E für die erste Liste im Speicherbereich A abgelegt, während ein aktueller Eintrag E für die zweite Liste im Speicherbereich B abgespeichert wird.

Ist das Überprüfungsergebnis im Schritt S5 negativ, d. h. im virtuellen Gesamtspeicher SP ist kein Platz oder nicht genügend Platz für einen vollständigen aktuellen Eintrag E frei, so schreitet das Verfahren zu einem Schritt S6. Im Schritt S6 wird überprüft, ob zu dem vorbestimmten Speicherbereich des aktuellen Eintrags E Speicherbereiche mit geringerer Wertigkeit existieren. Für den Fall, daß der Eintrag E für die erste Liste, d.h. im Speicherbereich A, eingetragen werden soll, bedeutet dies, daß der Speicherbereich Bᵣₑₛₜ eine geringere Wertigkeit aufweist als der Speicherbereich A. Demzufolge existiert ein Speicherbereich mit geringerer Wertigkeit und das Verfahren schreitet zu einem Schritt S8.

Im Schritt S8 werden die Einträge im Speicherbereich Bᵣₑₛₜ mit geringerer Wertigkeit gelöscht. Genauer gesagt werden im Schritt S8 solange Einträge im Speicherbereich Bᵣₑₛₜ mit geringerer Wertigkeit gelöscht, bis ausreichend Platz für den zu speichernden aktuellen Eintrag E vorhanden ist. Nach diesem Löschvorgang in Schritt S8 erfolgt wiederum die Speicherung des aktuellen Eintrags E für seinen vorbestimmten Speicherbereich im Schritt S9. Genauer gesagt würde nach dem Löschen von Einträgen aus der zweiten Liste Bᵣₑₛₜ ein Abspeichern eines Eintrags in der ersten Liste, d.h. im Speicherbereich A erfolgen. Der Speicherbereich A für die erste Liste hat sich somit dynamisch im virtuellen Gesamtspeicher SP ausgebreitet.

Wird andererseits im Schritt S6 festgestellt, daß keine weiteren Speicherbereiche mit geringerer Wertigkeit existieren, so beendet das Verfahren den Speichervorgang in einem Schritt S7 mit der Meldung "Speicher voll". Dieser Fall tritt beispielsweise dann ein, wenn einem Speicherbereich Bₘᵢₙ für eine dritte Liste die gleiche Wertigkeit zugeordnet wurde wie der ersten Liste A. In diesem Fall existiert kein weiterer Speicherbereich mit geringerer Wertigkeit, weshalb das Verfahren einen weiteren Eintrag für die erste Liste im Speicherbereich A mit der Meldung "Speicher voll" verneint.

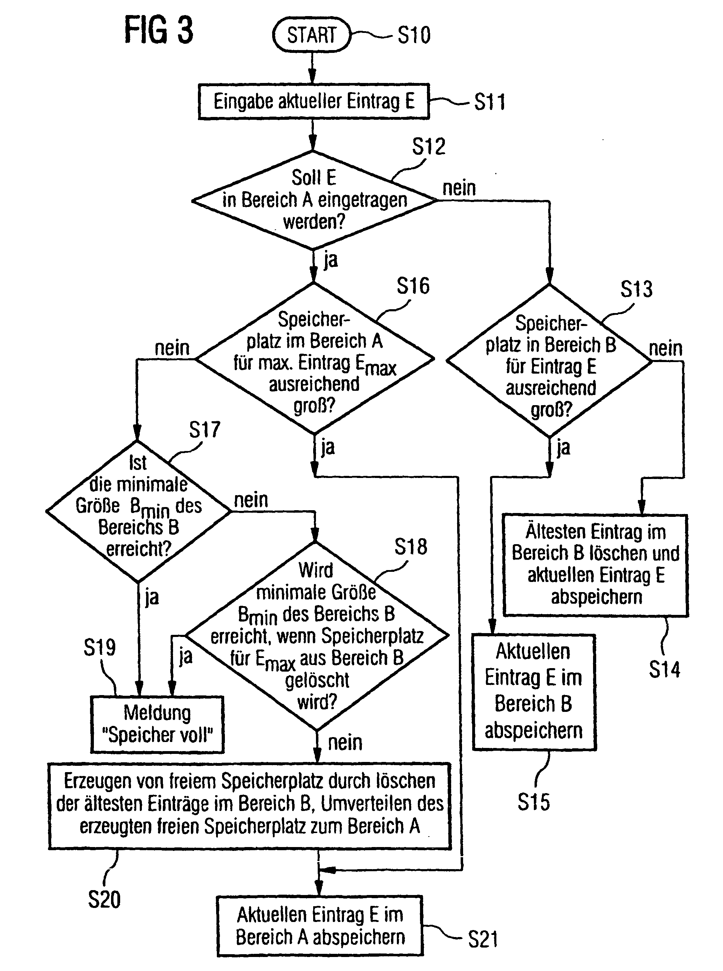

Figur 3 zeigt ein Flußdiagramm des erfindungsgemäßen Verfahrens gemäß einem bevorzugten zweiten Ausführungsbeispiel. Das vorliegende zweite Ausführungsbeispiel ist insbesondere auf die Verwendung einer Telefonbuchliste und einer Wahlwiederholungsliste in einem Kommunikations-Endgerät ausgelegt.

In einem Schritt S10 erfolgt eine Initialisierungsphase für das Verfahren. In einem Schritt S11 erfolgt wiederum eine Eingabe eines aktuellen Eintrags E für einen vorbestimmten Speicherbereich bzw. eine gewünschte Liste.

In einem Abfrageschritt S12 wird überprüft, ob der Eintrag E in dem Speicherbereich A für die Telefonbuchliste eingetragen werden soll oder nicht. Für den Fall, daß der Eintrag E nicht in der Telefonbuchliste A eingetragen werden soll, schreitet das Verfahren zu einem Schritt S13, bei dem überprüft wird, ob ein Speicherplatz in einem Speicherbereich B für eine Wahlwiederholungsliste ausreichend groß für den aktuellen Eintrag E ist. Für den Fall, daß der freie Speicherplatz im Speicherbereich B für die Wahlwiederholungsliste ausreichend groß ist, erfolgt anschließend in einem Schritt S15 eine Abspeicherung des aktuellen Eintrags E im Speicherbereich B. Wenn andererseits der Speicherplatz im Speicherbereich B für den aktuellen Eintrag E nicht ausreichend groß ist, so wird der älteste Eintrag im Speicherbereich B in einem Schritt S14 gelöscht und der aktuelle Eintrag E gespeichert. Dieser Löschvorgang bzw. Speichervorgang entspricht hierbei dem Speichervorgang in einem ringförmig angeordneten Stapelspeicher. Genauer gesagt werden die ältesten Einträge jeweils von den aktuellen Einträgen überschrieben, falls der Speicherbereich B bereits ausgefüllt ist. Das Auslesen erfolgt in diesem Speicherbereich in umgekehrter Reihenfolge, d.h. LIFO (last in first out), wobei ein letzter Eintrag als erster ausgelesen wird.

Ist in Schritt S12 andererseits der aktuelle Eintrag E ein Telefonbuch-Eintrag, d. h. der aktuelle Eintrag E soll im Speicherbereich A eingetragen werden, so wird anschließend ein Abfrageschritt S16 durchgeführt.

Im Schritt S16 wird überprüft, ob der Speicherplatz im getrennten Speicherbereich A ausreichend groß ist für einen maximalen Eintrag Eₘₐₓ. Auf diese Weise wird sichergestellt, daß der aktuelle Eintrag E vollständig im getrennten Speicherbereich A für die Telefonbuchliste abgelegt werden kann. Wird im Schritt S16 festgestellt, daß ausreichend Speicherplatz im getrennten Speicherbereich A für die Telefonbuchliste zur Verfügung steht, so wird anschließend in einem Schritt S21 der aktuelle Eintrag E im getrennten Speicherbereich A abgespeichert. Ist andererseits nicht ausreichend Speicherplatz im getrennten Speicherbereich A vorhanden, so wird das Verfahren mit einem Schritt S17 fortgesetzt, bei dem überprüft wird, ob bereits eine minimale Größe Bₘᵢₙ des getrennten Speicherbereichs B für die Wahlwiederholungsliste erreicht ist. Ist dies der Fall, so endet das Verfahren in einem Schritt S19 mit einer Meldung "Speicher voll". In diesem Fall kann kein weiterer Eintrag in der Telefonbuchliste eingetragen werden, da sowohl der Speicherbereich A als auch der Speicherbereich Bₘᵢₙ vollständig beschrieben sind.

Ist das Ergebnis andererseits im Schritt S17 negativ, d. h. die minimale Größe Bₘᵢₙ des getrennten Speicherbereichs B für die Wahlwiederholungsliste ist noch nicht erreicht, so wird in einem Schritt S18 eine weitere Überprüfung durchgeführt. Genauer gesagt wird im Schritt S18 überprüft, ob die minimale Größe Bₘᵢₙ des Speicherbereichs B erreicht wird, wenn ein Speicherplatz für einen maximalen Eintrag Eₘₐₓ aus dem getrennten Speicherbereich B gelöscht wird. Durch diese Abfrage wird im Schritt S18 sichergestellt, daß auch dann die Meldung "Speicher voll" im Schritt S19 ausgegeben wird, wenn zwar die minimale Größe Bₘᵢₙ des getrennten Speicherbereichs B für die Wahlwiederholungsliste in Schritt S17 noch nicht erreicht ist, jedoch der aktuelle Eintrag E eine derartige Größe aufweist, daß ein notwendiger Löschvorgang der Einträge im getrennten Speicherbereich B die minimale Größe Bₘᵢₙ unterschreiten würde. Ist jedoch das Ergebnis im Schritt S18 negativ, d. h. die minimale Größe Bₘᵢₙ des getrennten Speicherbereichs B wird auch dann nicht erreicht, wenn ein entsprechender Speicherplatz für einen maximalen Eintrag Eₘₐₓ gelöscht wird, so schreitet das Verfahren zu einem Schritt S20.

Im Schritt S20 werden die ältesten Einträge im getrennten Speicherbereich B für die Wahlwiederholungsliste gelöscht, wodurch freier Speicherplatz erzeugt wird. Anschließend wird der erzeugte freie Speicherplatz dem getrennten Speicherbereich A für die Telefonbuchliste zugeordnet bzw. umverteilt. Im nachfolgenden Schritt S21 erfolgt nunmehr wiederum die Abspeicherung des aktuellen Eintrags E im getrennten Speicherbereich A für die Telefonbuchliste.

Die Vorrichtung zur Realisierung des vorstehend beschriebenen Verfahrens, d. h. zum Speichern von Telefoneinträgen in zumindest zwei getrennten Speicherbereichen einer nicht-flüchtigen Speichervorrichtung besteht vorzugsweise aus einer Eingabeeinheit, die der herkömmlichen Tastatur eines Telefons bzw. Kommunikations-Endgeräts entspricht. Die weiteren Einheiten wie z. B. eine Zuordnungseinheit zum Zuordnen von Wertigkeiten, eine erste Erfassungseinheit zum Erfassen von freiem Speicherplatz und eine zweite Erfassungseinheit zum Erfassen von Speicherbereichen mit geringer Wertigkeit werden vorzugsweise in einer Zentraleinheit (CPU) eines Kommunikations-Endgeräts realisiert und nachfolgend nicht näher beschrieben. Der nicht-flüchtige Speicher 1 besteht vorzugsweise aus einem EEPROM oder FLASHROM und stellt einen persistenten Datenspeicher dar. Vorzugsweise wird die vorliegende Erfindung in einem schnurlosen Telefon oder einem sogenannten Handy realisiert, da in diesen Kommunikations-Endgeräten ein besonderer Bedarf für Telefonbuchlisten und Wahlwiederholungslisten besteht.

Die Erfindung wurde vorstehend anhand von Telefonbuchlisten und Wahlwiederholungslisten beschrieben. Sie ist jedoch nicht darauf beschränkt und kann beispielsweise auch Listen für Kurzwahlnummern verwalten. Eventuell kann auf diese Weise sogar der Speicherbereich C für die kundenspezifischen Einstellungen berücksichtigt werden. Ferner kann das erfindungsgemäße Verfahren und die dazugehörige Vorrichtung auch in einem schnurgebundenen Telekommunikations-Endgerät, wie z. B. einem Bildtelefon, oder computergesteuerten Endgerät betrieben werden.

## Patentansprüche

1. Verfahren zum Speichern von Einträgen in zumindest zwei getrennten Speicherbereichen (A, B) einer nicht-flüchtigen Speichervorrichtung (1) in einem Kommunikations-Endgerät mit den Schritten, wobei die Speicherbereiche (A, Bₘᵢₙ, B) feste Bereichsgrenzen aufweisen:
a) Zuweisen von Wertigkeiten für die getrennten Speicherbereiche (A, Bₘᵢₙ, Bᵣₑₛₜ),
b) Eingeben eines aktuellen Eintrags (E) für einen vorbestimmten Speicherbereich (A),
c) Überprüfen von freiem Speicherplatz in dem vorbestimmten Speicherbereich (A),
d) Überprüfen, ob Speicherbereiche mit geringerer Wertigkeit als der Wertigkeit des Speicherbereichs des aktuellen Eintrags (E) vorhanden sind, wenn Überprüfung in Schritt c) negativ,
e) Löschen von Einträgen im Speicherbereich mit geringerer Wertigkeit, wenn Überprüfung in Schritt d) positiv, und
f) Abspeichern des aktuellen Eintrags (E) für den vorbestimmten Speicherbereich, wenn Schritt e) durchgeführt wurde oder Schritt c) positiv ist.

2. Verfahren nach Patentanspruch 1, **dadurch gekennzeichnet, daß** ein voller Speicher (S7; S19) angezeigt wird, wenn die Überprüfung in Schritt d) negativ ist, und/oder ein vollständiger aktueller Eintrag (E) größer als der in Schritt c) überprüfte freie Speicherplatz ist.

3. Verfahren nach einem der Patentansprüche 1 oder 2, **dadurch gekennzeichnet, daß** im Schritt c) die getrennten Speicherbereiche (A, Bₘᵢₙ, B) zu einem virtuellen Gesamtspeicher (SP) zusammengefaßt werden, und der Gesamtspeicher (SP) auf freien Speicherplatz überprüft wird.

4. Verfahren nach einem der Patentansprüche 1 bis 3, **dadurch gekennzeichnet, daß** die zumindest zwei getrennten Speicherbereiche (A, Bₘᵢₙ, B) eine Telefonbuchliste (A) und eine Wahlwiederholungsliste (Bₘᵢₙ, B) darstellen.

5. Verfahren nach Patentanspruch 4, **dadurch gekennzeichnet, daß** die Telefonbuchliste (A) eine gleiche Wertigkeit wie eine minimale Größe (Bₘᵢₙ) und eine höhere Wertigkeit als der Rest (Bᵣₑₛₜ) der Wahlwiederholungsliste (B) aufweist.

6. Verfahren nach einem der Patentansprüche 4 oder 5, **dadurch gekennzeichnet, daß** das Abspeichern für die Wahlwiederholungsliste (B) ein Ring-Stapelspeichern und für die Telefonbuchliste (A) ein namensadressiertes Speichern darstellt.

7. Verfahren nach einem der Patentansprüche 1 bis 6, **dadurch gekennzeichnet, daß** ein weiterer getrennter Speicherbereich eine Kurzwahlliste darstellt.

8. Verfahren nach einem der Patentansprüche 1 bis 7, **dadurch gekennzeichnet, daß** das Löschen in Schritt e) nur dann durchgeführt wird, wenn ein aktueller Eintrag (E) vollständig im vorbestimmten Speicherbereich speicherbar ist.

9. Verfahren nach einem der Patentansprüche 6 bis 8, **dadurch gekennzeichnet, daß** beim Löschen in Schritt e) mit einem ältesten Eintrag begonnen wird.

10. Vorrichtung zum Speichern von Einträgen in zumindest zwei getrennten Speicherbereichen (A, B) einer nicht-flüchtigen Speichervorrichtung (1) in einem Kommunikations-Endgerät, wobei die Speicherbereiche (A, Bₘᵢₙ, B) feste Bereichsgrenzen aufweisen, mit:
a) einer Zuordnungseinheit zum Zuordnen von Wertigkeiten für die getrennten Speicherbereiche (A, Bₘᵢₙ, Bᵣₑₛₜ),
b) einer Eingabeeinheit zum Eingeben eines aktuellen Eintrags (E) in einem vorbestimmten Speicherbereich (A),
c) einer ersten Erfassungseinheit zum Erfassen von freiem Speicherplatz in einem der getrennten Speicherbereiche (A),
d) einer zweiten Erfassungseinheit zum Erfassen von Speicherbereichen (Bᵣₑₛₜ) mit geringerer Wertigkeit als der vorbestimmte Speicherbereich des aktuellen Eintrags (E),
e) einer Löscheinheit zum Löschen von gespeicherten Einträgen in Speicherbereichen (Bᵣₑₛₜ) mit geringerer Wertigkeit, wenn die zweite Erfassungseinheit Speicherbereiche mit geringerer Wertigkeit erfaßt, und
f) einer Speichereinheit zum Speichern des aktuellen Eintrags (E), wenn die Löscheinheit eine ausreichende Anzahl von Einträgen gelöscht oder die erste Erfassungseinheit einen ausreichenden freien Speicherplatz (A) erfaßt hat.

11. Vorrichtung nach Patentanspruch 10, **gekennzeichnet durch** eine Ausgabeeinheit, die einen vollen Speicher anzeigt, wenn die zweite Erfassungseinheit keine getrennten Speicherbereiche mit geringerer Wertigkeit erfaßt hat, und/oder der vollständige aktuelle Eintrag (E) größer als der von der ersten Erfassungseinheit erfaßte freie Speicherplatz ist.

12. Vorrichtung nach Patentanspruch 10 oder 11, **dadurch gekennzeichnet, daß** die getrennten Speicherbereiche eine Telefonbuchliste (A), eine Wahlwiederholungsliste (B) und/oder eine Kurzwahlliste darstellen.

13. Vorrichtung nach Patentanspruch 12, **dadurch gekennzeichnet, daß** die Telefonbuchliste (A) eine gleiche Wertigkeit wie eine minimale Größe (Bₘᵢₙ) der Wahlwiederholungsliste (B) aufweist.

14. Vorrichtung nach einem der Patentansprüche 12 oder 13, **dadurch gekennzeichnet, daß** die Wahlwiederholungsliste (B) in einem Ringspeicher und die Telefonbuchliste (A) in einem adressierbaren Namensspeicher realisiert wird.

15. Vorrichtung nach einem der Patentansprüche 10 bis 14, **dadurch gekennzeichnet, daß** die nichtflüchtige Speichervorrichhtung (1) ein EEPROM oder FLASHROM darstellt.

16. Vorrichtung nach einem der Patentansprüche 10 bis 15, **dadurch gekennzeichnet, daß** das Kommunikations-Endgerät ein schnurloses Telefon oder ein Handy darstellt.

## Claims

1. Method for storing entries in at least two separate storage areas (A, B) of a non-volatile memory (1) in a communications terminal having the steps, the storage areas (A, Bₘᵢₙ, B) having fixed area boundaries:
a) weightings for the separate storage areas (A, Bₘᵢₙ, Bᵣₑₘ) are assigned,
b) a current entry (E) for a predetermined storage area (A) is input,
c) free memory space in the predetermined storage area (A) is checked,
d) a check is carried out as to whether storage areas with a lower weighting than the weighting of the storage area of the current entry (E) are present if the check in step c) is negative,
e) entries in the storage area with a relatively low weighting are deleted if the check in step d) is positive, and
f) the current entry (E) for the predetermined storage area is stored if step e) has been carried out or step c) is positive.

2. Method according to Patent Claim 1, **characterized in that** a full memory (S7; S19) is indicated if the check in step d) is negative, and/or a complete current entry (E) is larger than the free memory space checked in step c).

3. Method according to one of Patent Claims 1 or 2, **characterized in that** in step c) the separate storage areas (A, Bₘᵢₙ, B) are combined to form a virtual global memory (SP), and the global memory (SP) is checked for free memory space.

4. Method according to one of Patent Claims 1 to 3, **characterized in that** the at least two separate storage areas (A, Bₘᵢₙ, B) constitute a telephone directory list (A) and a redial list (Bₘᵢₙ, B).

5. Method according to Patent Claim 4, **characterized in that** the telephone directory list (A) has an equal weighting to a minimum size (Bₘᵢₙ), and a higher weighting than the remainder (Bᵣₑₘ) of the redial list (B).

6. Method according to one of Patent Claims 4 or 5, **characterized in that** the storage for the redial list (B) constitutes toroidal stacked storage and constitutes name-addressed storage for the telephone directory list (A).

7. Method according to one of Patent Claims 1 to 6, **characterized in that** a further separate storage area constitutes an abbreviated dialling list.

8. Method according to one of Patent Claims 1 to 7, **characterized in that** the deletion in step e) is carried out only if a current entry (E) can be stored completely in the predetermined storage area.

9. Method according to one of Patent Claims 6 to 8, **characterized in that** the deletion in step e) is started with the oldest entry.

10. Device for storing entries in at least two separate storage areas (A, B) of a non-volatile memory (1) in a communications terminal, the storage areas (A, Bₘᵢₙ, B) having fixed area boundaries, comprising:
a) an assignment unit for assigning weightings for the separate storage areas (A, Bₘᵢₙ, Bᵣₑₘ),
b) an input unit for inputting a current entry (E) in a predetermined storage area (A),
c) a first sensing unit for sensing free memory space in the predetermined storage area (A),
d) a second sensing unit for sensing storage areas (Bᵣₑₘ) with a lower weighting than the predetermined storage area of the current entry (E),
e) a deletion unit for deleting stored entries in the storage areas (Bᵣₑₘ) with a relatively low weighting if the second sensing unit senses storage areas with a relatively low weighting, and
f) a storage unit for storing the current entry (E) if the deletion unit has deleted a sufficient number of entries or the first sensing unit has sensed a sufficient free amount of memory space (A).

11. Device according to Patent Claim 10, **characterized by** an output unit which indicates a full memory if the second sensing unit has not sensed any separate storage areas with a relatively low weighting, and/or the complete current entry (E) is larger than the free memory space sensed by the first sensing unit.

12. Device according to Patent Claim 10 or 11, **characterized in that** the separate storage areas constitute a telephone directory list (A), a redial list (B) and/or an abbreviated dialling list.

13. Device according to Patent Claim 12, **characterized in that** the telephone directory list (A) has an equal weighting to a minimum size (Bₘᵢₙ) of the redial list (B).

14. Device according to one of Patent Claims 12 or 13, **characterized in that** the redial list (B) is implemented in a toroidal memory and the telephone directory list (A) is implemented in an addressable name memory.

15. Device according to one of Patent Claims 10 to 14, **characterized in that** the non-volatile memory (1) constitutes an EEPROM or FLASHROM.

16. Device according to one of Patent Claims 10 to 15, **characterized in that** the communications terminal constitutes a cordless telephone or a mobile phone.

## Revendications

1. Procédé pour mémoriser des entrées dans au moins deux zones de mémoire séparées (A, B) d'un dispositif de mémoire non volatile (1) dans un terminal de communication, les zones de mémoire (A, Bₘᵢₙ, B) présentant des délimitations de zone fixes, comprenant les étapes :
a) allouer des poids aux zones de mémoire séparées (A, Bₘᵢₙ, Bᵣₑₛₜ),
b) introduire une entrée actuelle (E) pour une zone de mémoire prédéterminée (A),
c) contrôler l'espace de mémoire libre dans la zone de mémoire prédéterminée (A),
d) contrôler s'il existe des zones de mémoire de poids moins élevé que le poids de la zone de mémoire de l'entrée actuelle (E) si le contrôle à l'étape c) est négatif,
e) effacer des entrées dans la zone de mémoire de poids moins élevé si le contrôle à l'étape d) est positif, et
f) mémoriser l'entrée actuelle (E) pour la zone de mémoire prédéterminée si l'étape e) a été effectuée ou si l'étape c) est positive.

2. Procédé selon la revendication 1, **caractérisé en ce qu'**une mémoire pleine (S7 ; S19) est affichée si le contrôle à l'étape d) est négatif et/ou si une entrée actuelle (E) complète est plus volumineuse que l'espace de mémoire libre contrôlé à l'étape c).

3. Procédé selon l'une des revendications 1 ou 2, **caractérisé en ce qu'**à l'étape c) les zones de mémoire séparées (A, Bₘᵢₙ, B) sont regroupées en une mémoire globale (SP) virtuelle et **en ce que** la mémoire globale (SP) est contrôlée pour détecter de l'espace de mémoire libre.

4. Procédé selon l'une des revendications 1 à 3, **caractérisé en ce que** lesdites au moins deux zones de mémoire séparées (A, Bₘᵢₙ, B) représentent une liste d'annuaire téléphonique (A) et une liste de recomposition automatique (Bₘᵢₙ, B).

5. Procédé selon la revendication 4, **caractérisé en ce que** la liste d'annuaire téléphonique (A) présente un poids identique à une grandeur minimale (Bₘᵢₙ) et un poids plus élevé que le reste (Bᵣₑₛₜ) de la liste de recomposition automatique (B).

6. Procédé selon l'une des revendications 4 ou 5, **caractérisé en ce que** la mémorisation pour la liste de recomposition automatique (B) représente une mémorisation circulaire par lots et celle pour la liste d'annuaire téléphonique (A) une mémorisation adressée par nom.

7. Procédé selon l'une des revendications 1 à 6, **caractérisé en ce qu'**une autre zone de mémoire séparée représente une liste de numérotation abrégée.

8. Procédé selon l'une des revendications 1 à 7, **caractérisé en ce que** l'effacement à l'étape e) n'est effectué que lorsqu'une entrée actuelle (E) peut être mémorisée intégralement dans la zone de mémoire prédéterminée.

9. Procédé selon l'une des revendications 6 à 8, **caractérisé en ce qu'**à l'effacement à l'étape e), on commence par une entrée la plus ancienne.

10. Dispositif pour mémoriser des entrées dans au moins deux zones de mémoire séparées (A, B) d'un dispositif de mémoire non volatile (1) dans un terminal de communication, les zones de mémoire (A, Bₘᵢₙ, B) présentant des délimitations de zone fixes, comprenant :
a) une unité d'allocation destinée à allouer des poids aux zones de mémoire séparées (A, Bₘᵢₙ, Bᵣₑₛₜ),
b) une unité d'introduction destinée à introduire une entrée actuelle (E) dans une zone de mémoire prédéterminée (A),
c) une première unité de détection destinée à détecter de l'espace de mémoire libre dans la zone de mémoire prédéterminée (A),
d) une deuxième unité de détection destinée à détecter des zones de mémoire (Bᵣₑₛₜ) de poids moins élevé que la zone de mémoire prédéterminée de l'entrée actuelle (E),
e) une unité d'effacement destinée à effacer des entrées mémorisées dans des zones de mémoire (Bᵣₑₛₜ) de poids moins élevé si la deuxième unité de détection détecte des zones de mémoire de poids moins élevé, et
f) une unité de mémoire destinée à mémoriser l'entrée actuelle (E) si l'unité d'effacement a effacé un nombre suffisant d'entrées ou si la première unité de détection a détecté un espace de mémoire libre suffisant (A).

11. Dispositif selon la revendication 10, **caractérisé par** une unité de sortie qui affiche une mémoire pleine si la deuxième unité de détection n'a pas détecté de zones de mémoire séparées de poids moins élevé et/ou si l'entrée actuelle (E) complète est plus volumineuse que l'espace de mémoire libre détecté par la première unité de détection.

12. Dispositif selon la revendication 10 ou 11, **caractérisé en ce que** les zones de mémoire séparées représentent une liste d'annuaire téléphonique (A), une liste de recomposition automatique (B) et/ou une liste de numérotation abrégée.

13. Dispositif selon la revendication 12, **caractérisé en ce que** la liste d'annuaire téléphonique (A) présente un poids identique à une grandeur minimale (Bₘᵢₙ) de la liste de recomposition automatique (B).

14. Dispositif selon l'une des revendications 12 ou 13, **caractérisé en ce que** la liste de recomposition automatique (B) est réalisée dans une mémoire circulaire et la liste d'annuaire téléphonique (A) dans une mémoire adressable de noms.

15. Dispositif selon l'une des revendications 10 à 14, **caractérisé en ce que** le dispositif de mémoire non volatile (1) est un EEPROM ou FLASHROM.

16. Dispositif selon l'une des revendications 10 à 15, **caractérisé en ce que** le terminal de communication est un téléphone sans fil ou un téléphone portable.
